# EUROPÄISCHE PATENTSCHRIFT

(11) **EP 1 673 823 B1**
(45) Veröffentlichungstag und Bekanntmachung des Hinweises auf die Patenterteilung: **06.10.2010**
(21) Anmeldenummer: 04766546.8
(22) Anmeldetag: 19.08.2004
(51) Int. Cl.: H01M 10/42, H01M 10/052, H01M 10/0525

(54) **ELEKTRISCHER SEPARATOR MIT ABSCHALTMECHANISMUS, VERFAHREN ZU DESSEN HERSTELLUNG UND VERWENDUNG IN LITHIUM-BATTERIEN**
ELECTRIC SEPARATOR COMPRISING A SHUTDOWN MECHANISM, METHOD FOR THE PRODUCTION THEREOF, AND USE IN LITHIUM BATTERIES
SEPARATEUR ELECTRIQUE COMPORTANT UN MECANISME DE COUPURE, PROCEDE DE FABRICATION ET UTILISATION DANS DES PILES AU LITHIUM

(30) Priorität: 14.10.2003 DE 10347567
(43) Veröffentlichungstag der Anmeldung: 28.06.2006
(73) Patentinhaber: Evonik Degussa GmbH, 45128 Essen (DE)
(72) Erfinder: HENNIGE, Volker, 48249 Dülmen (DE); HYING, Christian, 46414 Rhede (DE); HÖRPEL, Gerhard, 48301 Nottuln (DE)
(86) Internationale Anmeldenummer: PCT/EP2004/051846
(87) Internationale Veröffentlichungsnummer: WO 2005/038960

(56) Entgegenhaltungen:
- EP-A- 1 184 917
- EP-A- 1 251 573
- WO-A-2004/021469
- WO-A-2004/049480

## Beschreibung

Die vorliegende Erfindung betrifft elektrische Separatoren, die einen Abschaltmechanismus aufweisen, ein Verfahren zu deren Herstellung sowie deren Verwendung in Batterien, insbesondere in Lithium-Batterien.

Ein elektrischer Separator ist ein Separator, der in Batterien und anderen Anordnungen, in denen Elektroden, z. B. unter Aufrechterhaltung von Ionenleitfähigkeit, voneinander separiert werden müssen, eingesetzt wird.

Der Separator ist üblicherweise ein dünner, poröser, isolierender Stoff mit hoher Ionendurchlässigkeit, guter mechanischer Festigkeit und Langzeitstabilität gegen die im System, z. B. im Elektrolyten der Batterie, verwendeten Chemikalien und Lösungsmittel. Er soll in Batterien die Kathode von der Anode elektronisch völlig isolieren aber für den Elektrolyten durchlässig sein. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z. B. die von Batterie-Zellen. Die Entwicklung wiederaufladbarer Batterien wird daher durch die Entwicklung geeigneter Separatormaterialien geprägt.

Allgemeine Informationen über elektrische Separatoren und Batterien können z. B. bei J.O. Besenhard in "Handbook of Battery Materials" (VCH-Verlag, Weinheim 1999) nachgelesen werden.

Derzeitig eingesetzte Separatoren bestehen überwiegend aus porösen organischen Polymerfilmen bzw. aus anorganischen Vliesstoffen, wie z. B. Vliesen aus Glas- oder Keramik-Materialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere. Ein typischer organischer Separator besteht z. B. aus Polypropylen oder aus einem Polypropylen/Polyethylen/Polypropylen-Verbund.

Die heute häufig verwendeten Lithium-Batterien zeichnen sich im Vergleich zu Systemen mit wässrigen Elektrolyten, wie etwa NiCd-Batterien oder Nickel-Metallhydrid-Batterien, durch viele Vorteile, wie z. B. hohe spezifische Energiedichte, keine Selbstentladung und kein Memoryeffekt aus. Lithium-Batterien besitzen aber den Nachteil, dass sie einen brennbaren Elektrolyten enthalten, der zudem sehr heftig mit Wasser reagieren kann. Für Hochenergiebatterien, d. h. Batterien die viel Aktivmaterial enthalten, ist es deshalb sehr wichtig, dass im Falle eines Unfalls und einer damit einhergehenden Erwärmung der Zelle der Stromkreis in der Batterie unterbrochen wird. Dies erfolgt üblicherweise durch spezielle Separatoren, die aus einem Verbund aus Polypropylen(PP)-Polyethylen(PE)-PP bestehen. Ab einer bestimmten Temperatur, der Abschalttemperatur (shut down Temperatur), schmilzt das PE auf und die Poren des Separators werden verschlossen und der Stromkreis wird unterbrochen.

Nachteilig an diesen Separatoren ist die begrenzte thermische Stabilität, denn bei einer weiteren Erwärmung der Zelle schmilzt auch das Polypropylen, so dass es bei dieser Durchbrenntemperatur (melt down Temperatur) zu einem Aufschmelzen des gesamten Separators und somit zu einem großflächigen inneren Kurzschluss kömmt, der häufig unter Feuerschein oder sogar Explosion zur Zerstörung der Batteriezelle führt. Nun sind zwar keramische Separatoren, wie z. B. Keramikpapiere oder Keramikvliese oder -gewebe bekannt, die den Effekt des Durchbrennens (melt down) nicht zeigen, diese zeigen leider aber auch keinen Abschalt(shut down)-Effekt, der insbesondere für Hochenergieanwendungen aber unverzichtbar ist und von Batterieherstellern gefordert wird.

Separatoren oder als Separatoren einsetzbare Membranen ohne Abschaltmechanismus sind hinlänglich, z. B. aus WO 99/15262 bekannt. Aus dieser Schrift kann auch die Herstellung von Separatoren oder Membranen, die als Separatoren geeignet sind, entnommen werden. Vorzugsweise werden als poröse Träger für die erfindungsgemäßen Separatoren allerdings keine elektrisch leitfähigen Träger wie z. B. Metallgewebe eingesetzt, da es bei der Verwendung solcher Träger zu inneren Kurzschlüssen kommen kann, wenn die keramische Beschichtung des Trägers nicht vollständig ist. Erfindungsgemäße Separatoren weisen deshalb bevorzugt Träger aus nicht elektrisch leitfähigen Materialien auf.

In neuster Zeit sind hybride Separatoren entwickelt worden, die Keramiken und Polymere aufweisen. In DE 102 08 277 wurden Separatoren basierend auf polymeren Substratmaterialien hergestellt, die eine poröse, elektrisch isolierende, keramische Beschichtung aufweisen. Trotz des vorhandenen polymeren Bestandteils zeigen diese Separatoren keinen Abschalteffekt wenn bestimmte Temperaturen überschritten wurden, da vermutlich nicht alle Poren geschlossen wurden.

In der jüngeren Anmeldung DE 102 389 45 sind von der Anmelderin erstmals Separatoren beschrieben worden, die eine keramische Schicht, welche ein völliges Zusammenbrechen des Separators (Melt-Down) verhindert, und eine Abschaltschicht aus Partikeln mit einem definierten Schmelzpunkt, die für eine sichere Abschaltung der Zelle (Shut-Down) bei einer Fehlfunktion der Batterie sorgt, aufweisen. Problematisch an der dort beschriebenen Abschaltschicht ist die nicht sehr hohe Abriebfestigkeit der Partikel, die zur Verletzung der Abschaltschicht bei der Verarbeitung der Separatoren führen kann.

Aufgabe der vorliegenden Erfindung bestand deshalb darin, einen Separator bereitzustellen, der eine Abschaltschicht aufweist, die bei der Verarbeitung der Separatoren nicht beschädigt wird.

Überraschenderweise wurde gefunden, dass eine funktionsfähige Abschaltschicht auch aus porösen Flächengebilden gebildet werden kann und dass eine solche Abschaltschicht keine Probleme bezüglich der Abriebfestigkeit aufweist und damit ein so ausgerüsteter Separator mit einer geringeren Gefahr der Beschädigung der Abschaltschicht verarbeitet werden kann. Dies ist insbesondere deshalb überraschend, da auch mit porösen Flächengebilden als Abschaltschicht eine ausreichend hohe Gesamtporosität des Separators erzielt werden kann.

Gegenstand der vorliegenden Erfindung sind deshalb Separatoren mit Abschaltfunktion für Lithium-Batterien umfassend einen porösen Träger mit einer auf und in diesem Träger befindlichen porösen anorganischen, nicht elektrisch leitfähigen Beschichtung, welche dadurch gekennzeichnet sind, dass auf der anorganischen Beschichtung, die Oxid-Partikel der Elemente Al, Si und/oder Zr mit einer mittleren Partikelgröße von 0,5 bis 10 µm aufweist, eine poröse Abschaltschicht aus einem Material, das bei einer vorgegebenen Temperatur schmilzt und die Poren der anorganischen Schicht schließt, vorhanden ist, wobei die Abschaltschicht durch ein poröses Flächengebilde, ausgewählt aus Gewebe, Vlies, Filz, Gewirk oder eine poröse Folie gebildet wird, und der Träger gewebte oder ungewebte Polymer- oder Glasfasern aufweist. Ebenfalls Gegenstand der vorliegenden Erfindung ist ein Verfahren zur Herstellung eines Separators mit Abschaltfunktion, welches dadurch gekennzeichnet ist, dass auf eine poröse anorganische Schicht eines Separators ein poröses Flächengebilde als poröse Schicht (Abschaltschicht) aus einem Material aufgebracht und fixiert wird, das eine definierte, gewünschte Schmelztemperatur aufweist, die kleiner oder gleich der Schmelztemperatur des Trägermaterials und kleiner als die Schmelztemperatur der anorganischen Schicht ist, und die Abschaltschicht durch Aufbringen eines Gewebes, Gewirkes, Filzes, Vlieses oder einer porösen Folie auf die poröse anorganische Schicht erzeugt wird.
Außerdem ist Gegenstand der vorliegenden Erfindung die Verwendung von erfindungsgemäßen Separatoren in Batterien, insbesondere Lithiumbatterien sowie die Batterien selbst, die einen solchen erfindungsgemäßen Separator aufweisen.
Die erfindungsgemäßen Separatoren, die einen porösen Träger mit einer auf und in diesem Träger befindlichen porösen anorganischen, nicht elektrisch leitfähigen Beschichtung, und eine auf der anorganischen Beschichtung eine mit dieser Schicht verbundene Abschaltschicht aus einem Material, das bei einer vorgegebenen Temperatur schmilzt, aufweisen, haben den Vorteil, dass sie hervorragende Sicherheitseigenschaften aufweisen. So weisen diese erfindungsgemäßen Separatoren einen Abschaltmechanismus (shut-down) Mechanismus auf, der darauf basiert, dass die Abschaltschicht beim Erreichen einer vorgegebenen Temperatur schmilzt und den Separator auf diese Weise verschließen, in dem das Material der Abschaltschicht in die Poren des anorganischen Materials eindringt und diese verschließt. Zum sogenannten Melt-Down (Durchbrennen) kann es bei dem erfindungsgemäßen Separator dagegen nicht kommen, da auch bei höheren Temperaturen die anorganische Schicht einen großflächigen Kurzschluss innerhalb der Batterie verhindert. Die erfindungsgemäßen Separatoren erfüllen also die Anforderungen nach einer von verschiedenen Batterieherstellern geforderten Sicherheitsabschaltung durch den Shut-Down in den Batteriezellen. Die anorganischen Partikel sorgen dafür, dass es niemals zu einem Melt-Down kommen kann. Somit ist sichergestellt, dass es keine Betriebszustände gibt, in denen ein großflächiger Kurzschluss entstehen kann.

Im Vergleich mit Separatoren, die ausschließlich ein flexibles poröses Flächengebilde als Träger aufweisen, weisen die erfindungsgemäßen Separatoren den Vorteil auf, dass als Trägermaterial ein polymeres Material eingesetzt werden kann, welches einen hohen Schmelzpunkt aufweist und somit die Herstellung der keramischen Beschichtung einfach gelingt, und als Abschaltmaterial ein Material eingesetzt werden kann, welches einen niedrigeren, genau festgelegten Schmelzpunkt aufweisen kann. Die Festigkeit des Separators genauso wie die Herstellung des Separators ist mit dem erfindungsgemäßen Verfahren nicht mehr abhängig von dem gewünschten Abschaltmaterial.

Durch eine geeignete Wahl des als Abschaltschicht verwendeten porösen Flächengebildes insbesondere der Größe der Poren, wird die Porosität und damit die Leistungsfähigkeit des Separators nicht oder nur in vernachlässigbarem Maße verringert.

Auch bei einem inneren Kurzschluss, der z. B. durch einen Unfall verursacht wurde, ist der erfindungsgemäße Separator sehr sicher. Würde sich z. B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei dem erfindungsgemäßen Separator schmilzt die polymere Abschaltschicht, nicht aber das anorganische Separatormaterial. Somit läuft die Reaktion im Inneren der Batteriezelle nach einem solchen Unfall sehr viel moderater ab. Diese Batterie ist somit deutlich sicherer als eine mit Polyrrierseparator. Dies kommt vor allem im mobilen Bereich zum Tragen.

Die Vorteile des erfindungsgemäßen Separators für den Einsatz in Lithium-Ionen-Batterien lassen sich wie folgt zusammenfassen:
◆ Hohe Porosität
◆ Ideale Porenweite
◆ Geringe Dicke
◆ Geringes Flächengewicht
◆ Sehr gutes Benetzungsverhalten
◆ Hohe Sicherheit, d. h. kein melt-down aber ein shut-down-Effekt
◆ Geringe Gefahr der Beschädigung der Abschaltschicht bei der Verarbeitung

Der erfindungsgemäße Separator mit Abschaltfunktion für Lithium-Batterien umfassend einen porösen Träger mit einer auf und in diesem Träger befindlichen porösen anorganischen, nicht elektrisch leitfähigen Beschichtung, zeichnet sich dadurch aus, dass auf der anorganischen Beschichtung, die Oxid-Partikel der Elemente Al, Si und/oder Zr mit einer mittleren Partikelgröße von 0,5 bis 10 µm aufweist, eine poröse Abschaltschicht aus einem Material, das bei einer vorgegebenen Temperatur schmilzt und die Poren der anorganischen Schicht schließt, vorhanden ist, wobei die Abschaltschicht durch ein poröses Flächengebilde gebildet wird, und der Träger gewebte oder ungewebte Polymer- oder Glasfasern, vorzugsweise Polymerfasern, aufweist oder aus diesen besteht. Die Abschaltschicht wird dabei durch ein Gewebe, Vlies, Filz, Gewirke oder eine poröse Folie gebildet.

Prinzipiell ist es möglich, dass die Abschaltschicht auf beiden Seiten des Separators vorhanden ist. Es hat sich aber als vorteilhaft erwiesen, wenn die Abschaltschicht nur auf einer Seite des erfindungsgemäßen Separators vorhanden ist. Eine einzige Abschaltschicht ist ausreichend, eine sichere Abschaltung im Bedarfsfall zu gewährleisten.

Bevorzugt weisen die erfindungsgemäßen Separatoren Träger auf, die flexibel sind und bevorzugt eine Dicke von weniger als 50 µm aufweisen. Durch die Flexibilität des Trägers wird gewährleitstet, dass auch der erfindungsgemäße Separator flexibel sein kann. Solche flexiblen Separatoren sind vielseitiger einsetzbar, z. B. in sogenannten Wickelzellen. Die Dicke des Trägers hat einen großen Einfluss auf die Eigenschaften des Separators, da zum einen die Flexibilität aber auch der Flächenwiderstand des mit Elektrolyt getränkten Separators von der Dicke des Trägers abhängig ist.

Bevorzugt weist der erfindungsgemäße Separator deshalb Träger auf, die eine Dicke von kleiner 30 µm, besonders bevorzugt kleiner 20 µm aufweisen. Um eine ausreichend hohe Leistungsfähigkeit der Batterien, insbesondere bei Lithiumionenbatterien erreichen zu können hat es sich als vorteilhaft erwiesen, wenn der erfindungsgemäße Separator einen Träger aufweist, der vorzugsweise eine Porosität von größer 50 %, bevorzugt von 50 bis 97 %, besonders bevorzugt von 60 bis 90 % und ganz besonders bevorzugt von 70 bis 90 % aufweist. Die Porosität ist dabei definiert als das Volumen des Vlieses (100 %) minus dem Volumen der Fasern des Vlieses, also dem Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen Gewicht des betrachteten Vlieses und der Dichte der Fasern, insbesondere der Polymerfasern. Ebenso vorteilhaft kann es sein, wenn der Träger eine Porenradienverteilung aufweist, bei der mindestens 50 % der Poren einen Porenradius von 75 bis 150 µm aufweisen.

Der poröse Träger weist vorzugsweise gewebte oder ungewebte Polymer- oder Glasfasern auf. Besonders bevorzugt weist der Träger ein Glas- oder Polymergewebe oder -vlies auf bzw. ist ein solches Gewebe oder Vlies. Als Polymerfasern weist der Träger vorzugsweise nicht elektrisch leitfähige Fasern von Polymeren auf, die vorzugsweise ausgewählt sind aus Polyacrylnitril (PAN), Polyester, wie z. B. Polyethylenterephthalat (PET) und/oder Polyolefin (PO), wie z. B. Polypropylen (PP) oder Polyethylen (PE) oder Mischungen solcher Polyolefine. Die Polymerfasern der Träger weisen vorzugsweise einen Durchmesser von 0,1 bis 10 µm, besonders bevorzugt von 1 bis 5 µm auf. Besonders bevorzugte flexible Vliese weisen ein Flächengewicht von kleiner 20 g/m², vorzugsweise von 5 bis 10 g/m² auf. Auf diese Weise wird eine besonders geringe Dicke und hohe Flexibilität des Trägers gewährleistet.

Besonders bevorzugt weist der erfindungsgemäße Separator ein Polymervlies als Träger auf, welches eine Dicke von kleiner 30 µm, vorzugsweise mit einer Dicke von 10 bis 20 µm aufweist. Besonders wichtig für die Verwendung in einem erfindungsgemäßen Separator ist eine möglichst homogene Porenradienverteilung im Vlies. Eine möglichst homogene Porenradienverteilung im Vlies führt in Verbindung mit optimal abgestimmten Oxid-Partikeln bestimmter Größe zu einer optimierten Porosität des erfindungsgemäßen Separators.

Der erfindungsgemäße Separator weist auf und in dem Träger eine poröse, elektrisch isolierende, anorganische Beschichtung, auf, die Oxid-Partikel der Elemente Al, Si und/oder Zr mit einer mittleren Partikelgröße von 0,1 bis 10 µm und bevorzugt von 0,5 bis 5 µm aufweist. Besonders bevorzugt weist der Separator eine auf und in dem Träger befindliche poröse anorganische Beschichtung auf, die Aluminiumoxid-Partikel mit einer mittleren Partikelgröße von 0,1 bis 10 µm und ganz besonders bevorzugt von 0,5 bis 5 aufweist, die mit einem Oxid der Metalle Zr oder Si verklebt sind. Durch das Vorhandensein der anorganischen Beschichtung auf und in dem porösen Träger werden die mechanischen Eigenschaften des erfindungsgemäßen Separators deutlich verbessert. So kann etwa ein Abplatzen der anorganischen Beschichtung vom Träger vermieden werden, was zu einem fatalen Versagen des Separators führen kann.

Die erfindungsgemäßen Separatoren lassen sich ohne Beschädigung vorzugsweise bis auf jeden Radius bis herab zu 100 m, vorzugsweise auf einen Radius von 100 m bis herab zu 50 mm und ganz besonders bevorzugt von 50 mm bis herab zu 0,5 mm biegen. Die erfindungsgemäßen Separatoren zeichnen sich außerdem dadurch aus, dass sie eine Reißfestigkeit von mindestens 1 N/cm, vorzugsweise von mindestens 3 N/cm und ganz besonders bevorzugt von größer 6 N/cm aufweisen können. Die hohe Reißfestigkeit und die gute Biegbarkeit des erfindungsgemäßen Separators hat den Vorteil, dass beim Laden und Entladen einer Batterie auftretende Veränderungen der Geometrien der Elektroden durch den Separator mitgemacht werden können, ohne dass dieser beschädigt wird. Die Biegbarkeit hat zudem den Vorteil, dass mit diesem Separator kommerziell standardisierte Wickelzellen produziert werden können. Bei diesen Zellen werden die Elektroden/Separator-Lagen in standardisierter Größe miteinander spiralförmig aufgewickelt und kontaktiert.

Die erfindungsgemäß auf der anorganischen Schicht vorhandenen Abschaltschicht kann beispielweise aus natürlichen oder künstlichen Wachsen, (niedrigschmelzenden) Polymeren, wie z. B. speziellen Polyolefinen, wie z.B. Polyethylen oder Polypropylen, oder Polymermischungen oder Mischungen bestehen, wobei das Material der Abschaltschicht so ausgewählt wird, das die Abschaltschicht bei der gewünschten Abschalttemperatur aufschmilzt und die Poren des Separators verschließt, so dass ein weiterer Ionenfluss großteils verhindert wird. Bevorzugt Materialien für die Abschaltschicht sind solche Materialien, die einen Schmelzpunkt von kleiner gleich 180 °C, vorzugsweise kleiner 130 °C aufweisen. Besonders bevorzugt weist der erfindungsgemäße Separator als Material für die Abschaltschicht ein Material auf, welchen eine gleich hohe oder niedrigere, vorzugsweise eine niedrigere Schmelztemperatur als das Material des Trägers bzw. von Teilen davon. Vorzugsweise beträgt die Schmelztemperaturdifferenz zwischen Material des Trägers und Material der Abschaltschicht zumindest 10 K. Durch die Verwendung von Materialien, die den Shut-Down bei relativ niedrigen Temperaturen bewirken lässt sich ein Schmelzen oder Entzünden der die Batterien umgebenden Materialien, wie z. B. Gehäuse oder Kabel weitestgehend vermeiden. Besonders bevorzugt weist der erfindungsgemäße Separator eine Abschaltschicht aus Polyethylen (-wachs) auf.

Die Dicke der Abschaltschicht ist prinzipiell beliebig, solange sichergestellt ist, dass eine Reduktion des Ionenflusses und damit der Leitfähigkeit des Separators, welche eine Reduktion der Leistungsfähigkeit der Batterie zur Folge hätte, verhindert wird. Die Dicke der Abschaltschicht ist nur in sofern kritisch, als das eine zu dicke Schicht den Widerstand in dem Batteriesystem unnötig erhöhen würde. Um eine sichere Abschaltung zu erzielen, sollte die Abschaltschicht eine Dicke von 1 bis 20 µm, bevorzugt von 5 bis 10 µm aufweisen. Die Porosität der Abschaltschicht beträgt bevorzugt von 30 bis 90 und besonders bevorzugt von 60 bis 80 %. Es kann vorteilhaft sein, wenn das Material der Abschaltschicht und zumindest Teile des Materials des Trägers identisch sind. Im Gegensatz zu Separatoren, die keine zusätzliche Abschaltschicht aufweisen und bei denen allein das polymere Trägermaterial als Abschaltmaterial nicht ausreichend ist, da zwischen den Poren des Materials anorganische Partikel vorhanden sind, die ein vollständiges verschließen verhindern, wird durch das zusätzliche Material der Abschaltschicht eine sichere Abschaltung gewährleistet.

Vorzugsweise weist der erfindungsgemäße Separator eine Porosität von 30 bis 80 % auf. Die Porosität bezieht sich dabei auf die erreichbaren, also offenen Poren. Die Porosität kann dabei mittels der bekannten Methode der Quecksilber-Porosimetrie bestimmt werden oder kann aus dem Volumen und der Dichte der verwendeten Einsatzstoffe errechnet werden, wenn davon ausgegangen wird, dass nur offene Poren vorliegen. Unter der mittleren Porengröße und der Porosität ist die mittlere Porengröße und die Porosität zu verstehen, die nach der bekannten Methode der Quecksilber-Porosimetrie bestimmt werden kann, z.B. mit einem Porosimeter 4000 von Carlo Erba Instruments. Der Quecksilber-Porosimetrie liegt die Washbum-Gleichung zu Grunde (E. W. Washburn, "Note on a Method of Determining the Distribution of Pore Sizes in a Porous Material", Proc. Natl. Acad. Sci., 7, 115-16 (1921)).

Die erfindungsgemäßen Separatoren mit Abschaltfunktion weisen vorzugsweise eine Dicke von kleiner 50 µm, bevorzugt eine Dicke von 5 bis 40 µm und ganz besonders bevorzugt eine Dicke von 20 bis 35 µm auf. Die Dicke des Separators hat einen großen Einfluss auf die Eigenschaften des Separators, da zum einen die Flexibilität aber auch der Flächenwiderstand des mit Elektrolyt getränkten Separators von der Dicke des Separators abhängig ist. Durch die geringe Dicke wird ein besonders geringer ionischer Widerstand des Separators in der Anwendung mit einem Elektrolyten erzielt. Der Separator selbst weist natürlich einen sehr hohen elektrischen Widerstand auf, da er selbst isolierende Eigenschaften aufweisen muss. Zudem erlauben dünnere Separatoren eine erhöhte Packungsdichte in einem Batteriestapel, so dass man im gleichen Volumen eine größere Energiemenge speichern kann.

Die erfindungsgemäßen Separatoren mit Abschaltfunktion werden vorzugsweise hergestellt durch das erfindungsgemäße Verfahren zur Herstellung eines Separators mit Abschaltfunktion, welches dadurch gekennzeichnet ist, dass auf eine poröse anorganische Schicht eines Separators ein poröses Flächengebilde als poröse Schicht (Abschaltschicht) aus einem Material aufgebracht und fixiert wird, das eine definierte, gewünschte Schmelztemperatur aufweist, die kleiner oder gleich der Schmelztemperatur des Trägermaterials und kleiner als die Schmelztemperatur der anorganischen Schicht ist. Prinzipiell kann jeder Separator, der eine anorganische Schicht auf einem porösen Träger aufweist, als Ausgangsmaterial zur Herstellung von erfindungsgemäßen Separatoren eingesetzt werden.

Die Herstellung von speziellen Separatoren bzw. Membranen, die als Separatoren in dem erfindungsgemäßen Verfahren eingesetzt werden können, ist prinzipiell aus WO 99/15262 bekannt. Der dort beschriebene Einsatz von elektrisch leitfähigen Einsatzstoffen und flexiblen Träge, wie z. B. Edelstahl, kann jedoch dazu führen, dass Separatoren erhalten werden, die für die Herstellung der erfindungsgemäßen Separatoren gar nicht oder nur sehr beschränkt einsetzbar sind. Der Einsatz von Separatoren, die gemäß dem nachfolgend beschriebenen Verfahren hergestellt wurden, hat sich bei dem Verfahren zur Herstellung des erfindungsgemäßen Separators als besonders vorteilhaft erwiesen.

Die bevorzugten erfindungsgemäßen Separatoren werden durch Aufbringen einer Suspension, die anorganische elektrisch nicht leitende Partikel auf einen porösen, nicht elektrisch leitenden Träger und anschließendes Verfestigen der Suspension zu einer anorganischen Beschichtung auf und in dem porösen Träger erhalten.

Die Suspension kann z. B. durch Aufdrucken, Aufpressen, Einpressen Aufrollen, Aufrakeln, Aufstreichen, Tauchen, Spritzen oder Aufgießen auf den Träger gebracht werden.

Der eingesetzte Träger weist vorzugsweise eine Dicke von kleiner 30 µm, bevorzugt kleiner 20 µm und besonders bevorzugt eine Dicke von 10 bis 20 µm auf. Besonders bevorzugt werden als Träger solche eingesetzt, wie sie bei der Beschreibung des erfindungsgemäßen Separators beschrieben wurden. Der eingesetzte poröse Träger weist also vorzugsweise gewebte oder ungewebte Polymer-, Glas- oder Keramikfasern auf. Besonders bevorzugt weist der Träger ein Glas- oder Polymergewebe oder -vlies auf bzw. ist ein solches Gewebe oder Vlies.

Bevorzugt weist der eingesetzte Träger Polymerfasern auf, die eine Erweichungstemperatur von größer 100 °C und eine Schmelztemperatur von größer 110 °C aufweisen. Es kann vorteilhaft sein, wenn die Polymerfasern einen Durchmesser von 0,1 bis 10 µm, vorzugsweise von 1 bis 5 µm aufweisen.

Die zur Herstellung der Beschichtung verwendete Suspension weist zumindest ein Oxid des Aluminiums, Siliziums und/oder Zirkoniums und zumindest ein Sol, der Elemente Al, Zr und/oder Si auf, und wird durch Suspendieren von Partikeln zumindest eines Oxids in zumindest einem dieser Sole hergestellt. Die eingesetzten Partikel weisen bevorzugt eine mittlere Partikelgröße von 0,1 bis 20 µm, zur Herstellung der erfindungsgemäßen Separatoren bevorzugt eine mittlere Partikelgröße von 0,5 bis 10 µm auf.

Die Sole werden durch Hydrolisieren zumindest einer Verbindung der Elemente Zr, Al und/oder Si erhalten. Ebenso kann es vorteilhaft sein, die zu hydrolisierende Verbindung vor der Hydrolyse in Alkohol oder eine Säure oder eine Kombination dieser Flüssigkeiten zu geben. Als zu hydrolisierende Verbindung wird vorzugsweise zumindest ein Nitrat, ein Chlorid, ein Carbonat oder eine Alkoholatverbindung der Elemente Zr, Al und/oder Si hydrolisiert. Die Hydrolyse erfolgt vorzugsweise in Gegenwart von Wasser, Wasserdampf, Eis, oder einer Säure oder eine Kombination dieser Verbindungen.

In einer Ausführungsvariante des Herstellverfahrens für den einsetzbaren Separator werden durch Hydrolyse der zu hydrolisierenden Verbindungen partikuläre Sole hergestellt. Diese partikulären Sole zeichnen sich dadurch aus, dass die in dem Sol durch Hydrolyse entstandenen Verbindungen partikulär vorliegen. Die partikulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben. Die hydrolisierte Verbindung kann zum Peptisieren mit zumindest einer organischen oder anorganischen Säure, vorzugsweise mit einer 10 bis 60%igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden. Die so hergestellten partikulären Sole können anschließend zur Herstellung von Suspensionen eingesetzt werden, wobei die Herstellung von Suspensionen zum Aufbringen auf mit polymeren Sol vorbehandelten Polymerfaservliesen bevorzugt ist.

In einer weiteren Ausführungsvariante des Herstellverfahrens für einen im erfindungsgemäßen Verfahren einsetzbaren Separator werden durch Hydrolyse der zu hydrolisierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen wird die Hydrolyse vorzugsweise so durchgeführt, dass die zu hydrolisierende Verbindung mit dem 0,5 bis 10fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10fache Menge an Wasser kann bei sehr langsam hydrolisierenden Verbindungen wie z. B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5fache Menge an Wasser eingesetzt wird. Eine Hydrolyse mit weniger als der bevorzugten Menge an Wasser, Wasserdampf, oder Eis führt ebenfalls zu guten Ergebnissen. Wobei ein Unterschreiten der bevorzugten Menge von einem halben Molverhältnis um mehr als 50 % möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung dieser Sole mit dem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Amylalkohol, Hexan, Cyclohexan, Ethylacetat und oder Mischungen dieser Verbindungen, gelöst wird bevor die eigentliche Hydrolyse vorgenommen wird. Ein so hergestelltes Sol kann zur Herstellung der erfindungsgemäßen Suspension oder als Haftvermittler in einem Vorbehandlungsschritt eingesetzt werden.
Sowohl die partikulären Sole als auch die polymeren Sole können als Sol in dem Verfahren zur Herstellung der Suspension eingesetzt werden. Neben den Solen, die wie gerade beschrieben erhältlich sind, können prinzipiell auch handelsübliche Sole, wie z. B. Zirkonnitratsol oder Silicasol eingesetzt werden. Das Verfahren der Herstellung von bevorzugt im erfindungsgemäßen Verfahren einsetzbaren Separatoren durch Aufbringen und Verfestigen einer Suspension auf einen Träger an und für sich ist aus DE 101 42 622 und in ähnlicher Form aus WO 99/15262 bekannt, jedoch lassen sich nicht alle Parameter bzw. Einsatzstoffe, auf die Herstellung des im erfindungsgemäßen Verfahren eingesetzten Separators übertragen. Der Prozess, der in WO 99/15262 beschrieben wird, ist in dieser Form insbesondere nicht ohne Abstriche auf polymere Vliesmaterialien übertragbar, da die dort beschriebenen sehr wasserhaltigen Solsysteme, häufig keine durchgängige Benetzung der üblicherweise hydrophoben Polymervliese in der Tiefe ermöglichen, da die sehr wasserhaltigen Solsysteme die meisten Polymervliese nicht oder nur schlecht benetzen. Es wurde festgestellt, dass selbst kleinste unbenetzte Stellen im Vliesmaterial dazu führen können, dass Membranen bzw. Separatoren erhalten werden, die Fehler (wie z. B. Löcher oder Risse) aufweisen und damit unbrauchbar sind..
Es wurde gefunden, dass ein Solsystem bzw. eine Suspension, welches bzw. welche im Benetzungsverhalten den Polymeren angepasst wurde, die Trägermaterialien, insbesondere die Vliesmaterialien vollständig durchtränkt und somit fehlerfreie Beschichtungen erhältlich sind. Bevorzugt erfolgt bei dem Verfahren deshalb eine Anpassung des Benetzungsverhaltens des Sols bzw. der Suspension. Diese Anpassung erfolgt vorzugsweise durch die Herstellung von polymeren Solen bzw. Suspensionen aus polymeren Solen wobei diese Sole einen oder mehrere Alkohole, wie z. B. Methanol, Ethanol oder Propanol oder Mischungen, die einen oder mehrere Alkohole sowie, vorzugsweise aliphatische Kohlenwasserstoffe aufweisen, umfassen. Es sind aber auch andere Lösemittelgemische denkbar, die dem Sol bzw. der Suspension zugegeben werden können, um diese im Vernetzungsverhalten an das verwendete Vlies anzupassen.

Es wurde festgestellt, dass die grundlegende Änderung des Solsystems und der daraus resultierenden Suspension zu einer deutlichen Verbesserung der Haftungseigenschaften der keramischen Komponenten auf dem und in einem polymeren Vliesmaterial führt. Solche guten Haftfestigkeiten sind mit partikulären Solsystemen normalerweise nicht erhältlich. Vorzugsweise werden deshalb Vliese, die Polymerfasern aufweisen, mittels Suspensionen beschichtet, die auf polymeren Solen basieren oder in einem vorgeschalteten Schritt durch Behandlung mit einem polymeren Sol mit einem Haftvermittler ausgerüstet wurden.

Besonders bevorzugt werden zur Herstellung der Suspension als Metalloxid-Partikel Aluminiumoxidpartikel eingesetzt, die bevorzugt eine mittleren Partikelgröße von 0,1 bis 20 aufweisen. Vorzugsweise beträgt der Massenanteil der suspendierten Komponente (Partikel) das 1 bis 250-fache, besonders bevorzugt das 1 bis 50fache des eingesetzten Sols.

Aluminiumoxid-Partikel im Bereich der bevorzugten Partikelgrößen werden beispielweise von der Firma Martinswerke unter den Bezeichnungen MZS 3 und MZS 1 und von der Firma AlCoA unter der Bezeichnung CT3000 SG, CL3000 SG, CT1200 SG, CT800SG und HVA SG angeboten.

Es hat sich herausgestellt, dass der Einsatz von handelsüblichen Oxidpartikeln unter Umständen zu unbefriedigenden Ergebnissen führt, da häufig eine sehr breite Korngrößenverteilung vorliegt. Es werden deshalb bevorzugt Metalloxidpartikel eingesetzt, die durch ein herkömmliches Verfahren, wie z. B. Windsichten und Hydroklassieren klassiert wurden.
Zur Verbesserung der Haftung der anorganischen Komponenten an Polymerfasern bzw. -vliesen als Substrat, aber auch zur Verbesserung der Haftung der später aufzubringenden Abschaltschicht, kann es vorteilhaft sein, den eingesetzten Suspensionen Haftvermittler, wie z. B. organofunktionelle Silane, wie z. B. die Degussa-Silane GLYMO, MEMO, AMEO, VTEO oder Silfin, beizufügen. Das Beifügen von Haftvermittlern ist dabei bei Suspensionen auf Basis Polymerer Sole bevorzugt. Als Haftvermittler sind insbesondere Verbindungen, ausgewählt aus den Octylsilanen, den Vinylsilanen, den aminfunktionalisierten Silanen und/oder den Glycidylfunktionalisierten Silanen, wie z. B. die Dynasilane der Fa. Degussa einsetzbar. Besonders bevorzugte Haftvermittler für Polyethylen (PE) und Polypropylen (PP) sind Vinyl-, Methyl- und Octylsilane, wobei eine ausschließliche Verwendung von Methylsilanen nicht optimal ist, für Polyamide und Polyamine sind es Aminfunktionelle Silane, für Polyacrylate, Polyacrylnitril und Polyester sind es Glycidyl-funktionalisierte Silane. Auch andere Haftvermittler sind einsetzbar, die aber auf die jeweiligen Polymere abgestimmt sein müssen. Die Haftvermittler müssen dabei so ausgewählt werden, dass die Verfestigungstemperatur unterhalb des Schmelz- oder Erweichungspunktes des als Substrat eingesetzten Polymeren und unterhalb dessen Zersetzungstemperatur liegt. Als Haftvermittler sind insbesondere die in Tabelle 1 aufgeführten Silane einsetzbar. Bevorzugt weisen erfindungsgemäße Suspensionen sehr viel weniger als 25 Gew.-%, vorzugsweise weniger als 10 Gew.-% Verbindungen auf, die als Haftvermittler fungieren können. Ein optimaler Anteil an Haftvermittler ergibt sich aus der Beschichtung der Fasern und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in m²g⁻¹) und anschließendes Dividieren durch den spezifischen Platzbedarf der Haftvermittler (in m² g⁻¹) erhalten werden, wobei der spezifische Platzbedarf häufig in der Größenordnung von 300 bis 400 m² g⁻¹ liegt.

Die nachfolgende Tabelle 1 enthält einen beispielhaften Überblick über einsetzbare Haftvermittler auf Basis von organofunktionellen Si-Verbindungen für typische als Vliesmaterial verwendete Polymere.

**Tabelle 1**

| Polymer | Organofunktionstyp | Haftvermittler |
|---|---|---|
| PAN | Glycidyl | GLYMO |
| | Methacryl | MEMO |
| PA | Amino | AMEO, DAMO |
| PET | Methacryl | MEMO |
| | Vinyl | VTMO, VTEO, VTMOEO |
| PE, PP | Amino | AMEO, AMMO |
| | Vinyl | VTMO, VTEO, Silfin |
| | Methacryl | MEMO |

| | | |
|---|---|---|
| Mit: AMEO = 3-Aminopropyltriethoxysilan DAMO = 2-Aminoethyl-3-aminopropyltrimethoxysilan GLYMO = 3-Glycidyloxytrimethoxysilan MEMO = 3-methacryloxypropyltrimethoxysilan Silfin = Vinylsilan + Initiator + Katalysator VTEO = Vinyltriethoxysilan VTMO = Vinyltrimethoxysilan VTMOEO = Vinyltris(2-methoxyethoxy)silan | | |

Die durch die Beschichtungen auf und im Träger vorhandene Suspension kann z. B. durch Erwärmen auf 50 bis 350 °C verfestigt werden. Da bei der Verwendung polymerer Substratmaterialien die maximale Temperatur durch das Trägermaterial vorgegeben wird, ist diese entsprechend anzupassen. So wird je nach Ausführungsvariante des Verfahrens die auf und im Träger vorhandene Suspension durch Erwärmen auf 100 bis 350 °C und ganz besonders bevorzugt durch Erwärmen auf 200 bis 280 °C verfestigt. Es kann vorteilhaft sein, wenn das Erwärmen für 1 Sekunde bis 60 Minuten bei einer Temperatur von 150 bis 350 °C erfolgt. Besonders bevorzugt erfolgt das Erwärmen der Suspension zum Verfestigen auf eine Temperatur von 110 bis 300 °C, ganz besonders bevorzugt bei einer Temperatur von 200 bis 280 °C und vorzugsweise für 0,5 bis 10 min. Das Erwärmen des Verbundes kann mittels erwärmter Luft, Heißluft, Infrarotstrahlung oder durch andere Erwärmungsmethoden nach dem Stand der Technik erfolgen.

Das Verfahren zur Herstellung von im erfindungsgemäßen Verfahren einsetzbaren Separatoren kann z. B. so durchgeführt werden, dass der Träger von einer Rolle abgerollt wird, mit einer Geschwindigkeit von 1 m/h bis 2 m/s, vorzugsweise mit einer Geschwindigkeit von 0,5 m/min. bis 20 m/min und ganz besonders bevorzugt mit einer Geschwindigkeit von 1 m/min bis 5 m/min durch zumindest eine Apparatur, welche die Suspension auf und in den Träger bringt, wie z. B. eine Walze, und zumindest eine weitere Apparatur, welche das Verfestigen der Suspension auf und in dem Träger durch Erwärmen ermöglicht, wie z. B. ein elektrisch beheizter Ofen durchläuft und der so hergestellte Separator auf einer zweiten Rolle aufgerollt wird. Auf diese Weise ist es möglich, den Separator im Durchlaufverfahren herzustellen. Auch die Vorbehandlungsschritte können im Durchlaufverfahren unter Beibehaltung der genannten Parameter durchgeführt werden.

Die so hergestellten Separatoren oder aber auf andere Arten hergestellte Separatoren weisen, wenn sie nicht unter Verwendung eines Haftvermittlers hergestellt wurden, häufig anorganische Beschichtungen auf, die einen sehr hydrophilen Charakter haben. Um eine gute Haftung des porösen Flächengebildes der Abschaltschicht auch auf hydrophilen porösen anorganischen Schichten zu erreichen, sind mehrere Varianten möglich.

In einer Ausfühnmgsvariante des erfindungsgemäßen Verfahren hat es sich als vorteilhaft erwiesen, die poröse anorganische Schicht vor dem Aufbringen der Abschaltschicht zu hydrophobieren. Die Herstellung hydrophober Membrane, die als Ausgangsmaterial für die Herstellung der erfindungsgemäßen Separatoren dienen können, wird beispielsweise in WO 99/62624 beschrieben. Vorzugsweise wird die poröse anorganische Schicht durch Behandlung mit Alkyl-, Aryl- oder Fluoralkylsilanen, wie sie z. B. unter dem Namen Markennamen Dynasilan von der Degussa vertrieben werden, hydrophobiert. Es können dabei z. B. die bekannten Methoden der Hydrophobierung, die unter anderem für Textilien angewendet werden (D. Knittel; E. Schollmeyer; Melliand Textilber. (1998) 79(5), 362-363*),* unter geringfügiger Änderung der Rezepturen, auch für poröse stoffdurchlässige Verbundwerkstoffe, welche z. B. nach dem in PCT/EP98/05939 (WO 1999/015262, *"Permeable, composite material, method for producing said composite material, and use of the same")* beschriebenen Verfahren hergestellt wurden, angewendet werden. Zu diesem Zweck wird ein stoffdurchlässiger Verbundwerkstoff (Membran oder Separator) mit einer Lösung Lösung als Lösemittel Wasser, welches vorzugsweise mit einer Säure, vorzugsweise Essigsäure, Salpetersäure oder Salzsäure, auf einen pH-Wert von 1 bis 3 eingestellt wurde, und/oder einen Alkohol, vorzugsweise Ethanol, aufweist. Der Anteil an mit Säure behandeltem Wasser bzw. Alkohol im Lösemittel kann jeweils von 0 bis 100 Vol.-% betragen. Vorzugsweise beträgt der Anteil an Wasser im Lösemittel von 0 bis 60 Vol.-% und der Anteil an Alkohol von 40 bis 100 Vol.-%. In das Lösemittel werden zum Erstellen der Lösung 0,1 bis 30 Gew.-%, vorzugsweise 1 bis 10 Gew.-% eines hydrophoben Stoffes gegeben werden. Als hydrophobe Stoffe können z. B. die oben aufgeführten Silane verwendet werden. Überraschenderweise findet eine gute Hydrophobierung nicht nur mit stark hydrophoben Verbindungen, wie zum Beispiel mit dem Triethoxy(3,3,4,4,5,5,6,6,7,7,8,8-tridecafluoroctyl)silan statt, sondern eine Behandlung mit Methyl,- Octyl- oder i-Butyltriethoxysilan ist vollkommen ausreichend, um den gewünschten Effekt zu erzielen. Die Lösungen werden, zur gleichmäßigen Verteilung der hydrophoben Stoffe in der Lösung, bei Raumtemperatur gerührt und anschließend auf die poröse anorganische Schicht aufgebracht und getrocknet. Das Trocknen kann durch eine Behandlung bei Temperaturen von 50 bis 350 °C und bevorzugt 150 bis 200 °C beschleunigt werden.
In einer weiteren Ausführungsvariante des erfindungsgemäßen Verfahren kann die poröse anorganische Schicht vor dem Aufbringen der Abschaltschicht auch mit anderen Haftvermittlern behandelt werden. Die Behandlung mit einem der in Tabelle 1 genannten Haftvermittler kann dann ebenfalls wie oben beschrieben erfolgen, d. h. dass die poröse anorganische Schicht mit einem polymeren Sol, welches ein Silan als Haftvermittler aufweist, behandelt wird. Insbesondere kann die Behandlung in der Weise erfolgen, dass bei der Herstellung des Separators wie oben beschrieben Haftvermittler eingesetzt werden. Bevorzugt werden die Haftvermittler ausgewählt aus der Reihe der hydrolisierten oder nicht hydrolisierten funktionalisierten Alkyltrialkoxysilane. Ganz besonders bevorzugt werden MEMO, AMEO und/oder GLYMO als Haftvermittler eingesetzt.
Die Abschaltschicht auf Basis eines porösen Flächengebildes wird auf der porösen anorganischen Schicht des Separators dadurch erzeugt, dass als poröses Flächengebilde ein Gewebe, Gewirke, Filz, Vlies oder eine poröse Folie auf die poröse anorganische Schicht aufgebracht wird. Das Aufbringen der Abschaltschicht kann z.B. durch Auflegen oder Aufkaschieren des porösen Flächengebildes auf die poröse anorganische Schicht erfolgen. Das Kaschieren kann bei Raumtemperatur oder bei erhöhter Temperatur, die unterhalb der Schmelztemperatur des Materials des Flächengebildes liegt, durchgeführt werden. Beim Kaschieren können die oben genannten Haftvermittler als Kaschiermittel eingesetzt werden. Die Haftvermittler können aus der bekannten Reihe der Alkyltrialkoxysilane ausgewählt sein. Diese Haftvermittler liegen vorzugsweise in Form von Lösungen oder Solen vor und werden entweder zuerst auf Polymer oder Separator aufgebracht und dort verfestigt oder aber die Silane werden direkt vor bzw. bei dem Kaschieren eingebracht und so Polymer und Keramik verklebt. Geeignete Silane sind z. B. von der Degussa als reine Produkte oder als wässrige Lösungen des hydrolisierten Silans unter z. B. der Bezeichnung Dynasilan 2926, 2907 oder 2781 erhältlich.

Beim Aufkaschieren (mit oder ohne Verwendung eines Kaschiermittels) aber auch beim Auflegen des porösen Flächengebildes kann die Abschaltschicht nach dem Aufbringen auf die poröse anorganische Schicht durch einmaliges Erwärmen auf eine Temperatur oberhalb der Glastemperatur, so dass ein Anschmelzen des Materials ohne Änderung der eigentlichen Form des porösen Flächengebildes erreicht wird, auf der porösen anorganischen Schicht fixiert werden. Sind Kaschiermittel oder Haftvermittler eingesetzt worden, so kann die Abschaltschicht nach dem Aufbringen auf die poröse anorganische Schicht auch durch einmaliges Erwärmen auf eine Temperatur von größer 50 und kleiner der Schmelztemperatur des Materials der Abschaltschicht erwärmt werden, so dass die Abschaltschicht über die Haftvermittler mit dem Separator verklebt werden.

Eine solche Temperaturbehandlung kann aber auch erforderlich sein, um die Silane als Haftvermittler zu aktivieren, damit diese die Abschaltschicht mit dem keramischen Separator verkleben.

In einer bevorzugten Ausführungsform wird MEMO als Haftvermittler zwischen Abschaltschicht und keramischem Separator verwendet. Die Aktivierung erfolgt hier mit UV-Licht bei einer bevorzugten Wellenlänge von 200 bis 300 nm.

Eine weitere Möglichkeit der Fixierung der Abschaltschicht auf der porösen anorganischen Schicht des Separators kann z.B. dadurch erfolgen, dass die Abschaltschicht auf die poröse anorganische Schicht aufgebracht (aufgelegt) wird und bei der Fertigung der Batterie fixiert wird, wie z.B. durch mit einwickeln bei Wickelzellen oder in entsprechend gestapelten prismatischen Zellen.

Als Material für die Abschaltschicht können alle Materialien eingesetzt werden, die einen definierten Schmelzpunkt aufweisen. Das Material für die Abschaltschicht wird dabei entsprechend der gewünschten Abschalttemperatur ausgewählt. Da bei den meisten Batterien relativ niedrige Abschalttemperaturen gewünscht werden, ist es vorteilhaft als Material solche porösen Flächengebilde als Abschaltschicht einzusetzen, die ausgewählt sind aus Polymeren, Polymermischungen, natürlichen und/oder künstlichen Wachsen. Vorzugsweise weisen diese eine Schmelztemperatur von kleiner gleich 180°C, bevorzugt kleiner 150 °C und ganz besonders bevorzugt kleiner 130 °C auf. Besonders bevorzugt werden als Abschaltschichten solche aus Polypropylen- oder Polyethylen(-wachs) eingesetzt. Mögliche Lieferanten für solche polymeren Flächengebilde sind typische Vlieslieferanten wie Freudenberg oder Hersteller organischer Separatoren wie Celgard, DSM, Asahi oder Ube. Es kann wie oben angegeben vorteilhaft sein, wenn das Material, aus welchem das poröse Flächengebilde besteht, mit zumindest einem Teil des Materials des Trägers identisch ist.

Das Aufbringen des porösen Flächengebildes und gegebenenfalls von Haftvermittlern sowie ein eventuelles Erwärmen kann kontinuierlich oder quasi kontinuierlich durchgeführt werden. Wird ein flexibler Separator als Ausgangsmaterial eingesetzt, so kann dieser wiederum von einer Rolle abgewickelt, durch eine Beschichtungs-, Trocknungs- und gegebenenfalls Erwärmungsapparatur geführt und anschließend wieder aufgerollt werden.

Die erfindungsgemäßen Separatoren bzw. die erfindungsgemäß hergestellten Separatoren können insbesondere als Separator in Batterien, insbesondere als Separator in Lithiumbatterien, vorzugsweise Lithium-Hochleistungs- und Hochenergiebatterien eingesetzt werden. Solche Lithium-Batterien können als Elektrolyten Lithiumsalze mit großen Anionen in Carbonaten als Lösemittel auf. Geeignete Lithiumsalze sind z. B. LiClO₄, LiBF₄, LiAsF₆ oder LiPF₆, wobei LiPF₆ besonders bevorzugt ist. Als Lösemittel geeignete organische Carbonate sind z. B. Ethylencarbonat, Propylencarbonat, Dimethylcarbonat, Ethylmethylcarbonat oder Diethylcarbonat oder Mischungen davon.
Gegenstand der Erfindung sind außerdem Batterien, insbesondere Lithium-Batterien die einen erfindungsgemäßen oder erfindungsgemäß hergestellten Separator aufweisen.

Die vorliegende Erfindung wird durch die nachfolgenden Beispiele beschrieben, ohne darauf beschränkt zu sein.

### Vergleichsbeispiel 1: S450PET-Separator ohne Abschaltfunktion

Zu 160 g Ethanol wurden zunächst 15 g einer 5 Gew.-%igen, wässrigen HNO₃-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, wurden dann jeweils 125 g der Aluminiumoxide Martoxid MZS-1 und Martoxid MZS-3 (Hersteller beider Aluminiumoxide: Martinswerke) suspendiert. Dieser Schlicker wurde für mindestens weitere 24 h mit einem Magnetrührer homogenisiert, wobei das Rührgefäß abgedeckt werden musste, damit es nicht zu einem Lösemittelverlust kam.

Ein PET-Vlies mit einer Dicke von ca. 22 µm und einem Flächengewicht von etwa 15 g/m² wurde dann in einem kontinuierlichen Aufwalzverfahren (Bandgeschwindigkeit ca. 8 m/h, T = 220 °C) mit obigem Schlicker beschichtet. Bei diesem Aufwalzverfahren wird der Schlicker mit einer Walze aufgewalzt. Das Vlies lief anschließend durch einen Ofen (Länge 1 m), der die angegebene Temperatur aufweist. In den nachfolgenden Versuchen wurde die gleiche Methode bzw. Anordnung zur Beschichtung verwendet. Man erhielt am Ende einen Separator mit einer mittleren Porenweite von 450 nm und einer Dicke von ca. 50 µm. Die Gurley-Zahl betrug etwa 10.

### Vergleichsbeispiel 2: Li-Ionen-Batterie mit hybridem keramischen Separator ohne Abschaltfunktion

Ein gemäß Vergleichsbeispiel 1 hergestellter S450PET-Separator wurd in eine Li-Ionen-Zelle, bestehend aus einer Positiv-Masse ais LiCoO₂, einer Negativ-Masse bestehend aus Graphit und einem Elektrolyten aus LiPF₆ in Ethylencarbonat/ Dimethylcarbonat gebaut. Es wurde das Lade- und Entladeverhalten dieser Batterie überprüft. Die Batterie zeigte nach etwa 250 Zyklen (Laden/Entladen mit C/5) nur einen geringen Abfall der Kapazität um wenige Prozentpunkte. Auch eine Erhöhung der Ladespannung von 4,1 auf 4,2 Volt im 200.-ten Ladezyklus schadete der Batterie nicht.

Diese Batterie wurde über die äußeren Kontakte kurzgeschlossen. Aufgrund des großen Stromes der jetzt fließt und des Innenwiderstands des Separators kommt es zu einer sehr starken Erwärmung der Zelle auf über 200 °C. Hierbei öffnet sich das Sicherheitsventil und die Zelle bläst ab, d.h. Elektrolyt dringt aus der Zelle aus. Aufgrund der keramischen Natur des Separators kommt es aber zu keinem melt-down, durch welchen sich die Temperatur weiter erhöhen würde und die Zelle unter Umständen explodieren könnte. Am Ende ist die Zelle vollständig entladen.

### Beispiel 1: S450PET/SD-Separator mit Abschaltfunktion (erfindungsgemäß)

Der Separator gemäß Vergleichsbeispiel 1 wird mit einem Sol aus 2,5 g AMEO und 2,5 g GLYMO sowie 2 g 5 % HNO₃ in 100 g Ethanol behandelt. Auf den noch feuchten Separator wird eine poröse PE-Folie (Dicke 10 µm, Porosität: 60%) aufgelegt und bei 110°C getrocknet.

Der Separator hat eine Gurley-Zahl von etwa 20. Nach dem Erwärmen auf 130°C für 10 min steigt die Gurley-Zahl auf ca. 500 an.

### Beispiel 2: S450PET/SD-Separator mit Abschaltfunktion (erfindungsgemäß)

Der Separator gemäß Vergleichsbeispiel 1 wurde mit einem Sol aus 5 g MEMO sowie 2 g 5 % HNO₃ in 100 g Ethanol behandelt. Auf den noch feuchten Separator wurde eine poröse PE-Folie (Dicke 10 µm, Porosität: 60%) aufgelegt und mit UV-Licht einer Wellenlänge von 254 nm bestrahlt.

Der Separator hat eine Gurley-Zahl von etwa 20. Nach dem Erwärmen auf 130°C für 10 min steigt die Gurley-Zahl auf ca. 500 an.

### Beispiel 3: S450PET/SD-Separator mit Abschaltfunktion (erfindungsgemäß)

Auf einen Separator gemäß Vergleichsbeispiel 1 wurde ein PE-Vlies (Dicke: 8 µm, Porosität: ca. 70%) bei erhöhtem Druck und einer Temperatur von 115°C auflaminiert.

Der Separator hat eine Gurley-Zahl von etwa 15. Nach dem Erwärmen auf 130°C für 10 min steigt die Gurley-Zahl auf ca. 500 an.

### Beispiel 4: Batterie mit Separator gemäß Beispiel 1

Ein gemäß Beispiel 1 hergestellter S450PET/SD-Separator wurde in eine Li-Ionen-Zelle, bestehend aus einer Positiv-Masse ais LiCoO₂, einer Negativ-Masse bestehend aus Graphit und einem Elektrolyten aus LiPF₆ in Ethylencarbonat/ Dimethylcarbonat eingebaut. Es wurde das Lade- und Entladeverhalten dieser Batterie überprüft. Die Batterie zeigte nach etwa 250 Zyklen (Laden/Entladen mit C/5) nur einen geringen Abfall der Kapazität um wenige Prozentpunkte. Auch eine Erhöhung der Ladespannung von 4,1 auf 4,2 Volt im 200.-ten Ladezyklus schadete der Batterie nicht.

Diese Batterie wurde anschließend über die äußeren Kontakte kurzgeschlossen. Aufgrund des großen Stromes der jetzt fließt und des Innenwiderstands des Separators kommt es zu einer sehr starken Erwärmung der Zelle. Bei einer Temperatur von 130°C kommt es aber zum Schmelzen der Abschaltschicht und der Strom bricht zusammen. Die Temperatur steigt nur noch wenig weiter an, das Sicherheitsventil öffnet nicht. Es tritt kein Elektrolyt aus!

### Bestimmung des BP:

Der Bubble Point (BP) ist der Druck in bar, bei dem eine Gasblase durch eine vollständig benetzte Membrane (Separator) tritt. Er ist ein Maß für die Größe der größten Pore bzw. Fehlstelle in einer Membrane. Je kleiner der BP desto größer ist die größte Pore bzw. der größte Fehler (Loch).

Zur Messung des Bubble Points wurde eine Membrane mit einer Größe von 30 mm Durchmesser zugeschnitten. Die zugeschnittene Membrane wurde in der Benetzungsflüssigkeit (VE-Wasser) wenigstens einen Tag lang gelagert. Die so vorbereitete Membrane wurde in einer Apparatur zwischen einer runden Sintermetallscheibe mit einem BP von ca. 0 bar (Messung ohne Membran), die als Stützmaterial dient, und einer Silikongummidichtung eingebaut, wobei die Apparatur oberhalb der Membran ein nach oben offenes Gefäß aufwies, welches den gleichen Querschnitt aufwies wie die Membran und mit 2 cm mit VE-Wasser gefüllt wurde, und unterhalb der Membran ein zweites Gefäß aufwies, welches ebenfalls den gleichen Querschnitt wie die Membran aufwies, und welches mit einem Lufteinlass ausgerüstet war, über welchen Pressluft über ein Druckminderventil in das Gefäß eingeleitet werden konnte. Die Membran wurde dabei unter der Sintermetallscheibe eingebaut, sodass die Sintermetallscheibe den Boden des oberen Gefäßes bildete und die Membrane das untere Gefäß abschloss. In 0,1 bar Schritten wurde anschließend der Druck im unteren Gefäß erhöht, wobei zwischen jeder Druckerhöhung eine halbe Minute liegt. Nach jeder Druckerhöhung wurde die Wasseroberfläche im oberen Gefäß für ca. eine halbe Minute beobachtet. Beim Auftreten der ersten kleinen Gasbläschen an der Wasseroberfläche ist der Druck des BP erreicht und die Messung wurde abgebrochen.

### Bestimmung der Gurley-Zahl

Die Gurleyzahl wurde in der gleichen Apparatur bestimmt wie der BP. Bei der Bestimmung der Guzrley-Zahl wurde aber die Zeit t bestimmt, die ein Gasvolumen von 100 ml benötigt um durch eine Fläche von 6,45 cm² (bei einem Druck von 31 cm Wassersäule des Gases) zu strömen. Die Zeit t ist die Gurley-Zahl.

## Patentansprüche

1. Separator mit Abschaltfunktion für Lithium-Batterien umfassend einen porösen Träger mit einer auf und in diesem Träger befindlichen porösen anorganischen, nicht elektrisch leitfähigen Beschichtung,
**dadurch gekennzeichnet,**
**dass** auf der anorganischen Beschichtung, die Oxid-Partikel der Elemente Al, Si und/oder Zr mit einer mittleren Partikelgröße von 0,5 bis 10 µm aufweist, eine poröse Abschaltschicht aus einem Material, das bei einer vorgegebenen Temperatur schmilzt und die Poren der anorganischen Schicht schließt, vorhanden ist, wobei die Abschaltschicht durch ein poröses Flächengebilde, ausgewählt aus Gewebe, Vlies, Filz, Gewirk oder eine poröse Folie gebildet wird, und der Träger gewebte oder ungewebte Polymer- oder Glasfasern aufweist.

2. Separator gemäß Anspruch 1,
**dadurch gekennzeichnet,**
**dass** der Träger flexibel ist und eine Dicke von weniger als 50 µm aufweist.

3. Separator nach Anspruch 2,
**dadurch gekennzeichnet,**
**dass** der Träger ein Polymervlies ist.

4. Separator nach zumindest einem der Ansprüche 1 bis 3,
**dadurch gekennzeichnet,**
**dass** die Polymerfasern des Trägers, ausgewählt sind aus Fasern von Polyacrylnitril, Polyester und/oder Polyamid.

5. Separator nach zumindest einem der Ansprüche 1 bis 4,
**dadurch gekennzeichnet,**
**dass** die Abschaltschicht eine Dicke von 1 bis 20, bevorzugt von 5 bis 10 µm aufweist.

6. Separator gemäß zumindest einem der Ansprüche 1 bis 5,
**dadurch gekennzeichnet,**
**dass** die Abschaltschicht aus einem Material, ausgewählt aus Polymeren, Polymermischungen, natürlichen oder künstlichen Wachsen oder Mischungen davon besteht.

7. Separator gemäß zumindest einem der Ansprüche 1 bis 6,
**dadurch gekennzeichnet,**
**dass** die Abschaltschicht aus einem Material besteht, welches eine Schmelztemperatur von kleiner 130 °C aufweist.

8. Separator gemäß zumindest einem der Ansprüche 1 bis 7,
**dadurch gekennzeichnet,**
**dass** das Material der Abschaltschicht und zumindest Teile des Materials des Trägers identisch sind.

9. Verfahren zur Herstellung eines Separators mit Abschaltfunktion,
**dadurch gekennzeichnet,**
**dass** auf eine poröse anorganische Schicht eines Separators ein poröses Flächengebilde als poröse Schicht (Abschaltschicht) aus einem Material aufgebracht und fixiert wird, das eine definierte, gewünschte Schmelztemperatur aufweist, die kleiner oder gleich der Schmelztemperatur des Trägermaterials des Separators und kleiner als die Schmelztemperatur der anorganischen Schicht ist, und die Abschaltschicht durch Aufbringen eines Gewebes, Gewirkes, Filzes, Vlieses oder einer porösen Folie auf die poröse anorganische Schicht erzeugt wird.

10. Verfahren nach Anspruch 9,
**dadurch gekennzeichnet,**
**dass** damit ein Separator gemäß zumindest einem der Ansprüche 1 bis 8 hergestellt wird.

11. Verfahren nach Anspruch 9,
**dadurch gekennzeichnet,**
**dass** die poröse anorganische Schicht vor dem Aufbringen der Abschaltschicht hydrophobiert wird.

12. Verfahren gemäß zumindest einem der Ansprüche 10 oder 11,
**dadurch gekennzeichnet,**
**dass** die poröse anorganische Schicht vor dem Aufbringen der Abschaltschicht mit einem Haftvermittler behandelt wird.

13. Verfahren nach Anspruch 12,
**dadurch gekennzeichnet,**
**dass** die poröse anorganische Schicht durch Verwendung eines polymeren Sols, welches ein Silan als Haftvermittler für die später aufzubringende Abschaltschicht aufweist, hergestellt wird.

14. Verfahren gemäß Anspruch 13,
**dadurch gekennzeichnet,**
**dass** der Haftvermittler ausgewählt wird aus der Reihe der hydrolisierten oder nicht hydrolisierten funktionalisierten Alkytrialkoxysilane.

15. Verfahren nach zumindest einem der Ansprüche 10 bis 14,
**dadurch gekennzeichnet,**
**dass** die Abschaltschicht nach dem Aufbringen auf die poröse anorganische Schicht durch einmaliges Erwärmen auf eine Temperatur von größer 50°C und kleiner der Schmelztemperatur des Materials der Abschaltschicht erwärmt wird, so dass die Abschaltschicht über die Haftvermittler mit dem Separator verklebt werden.

16. Verfahren nach zumindest einem der Ansprüche 10 bis 15,
**dadurch gekennzeichnet,**
**dass** die Abschaltschicht nach dem Aufbringen auf die poröse anorganische Schicht durch einmaliges Erwärmen auf eine Temperatur oberhalb der Glastemperatur, so dass ein Anschmelzen des Materials ohne Änderung der eigentlichen Form erreicht wird, fixiert wird.

17. Verfahren nach zumindest einem der Ansprüche 10 bis 16,
**dadurch gekennzeichnet,**
**dass** die Abschaltschicht durch Aufkaschierten auf die poröse anorganische Schicht aufgebracht wird.

18. Verfahren nach zumindest einem der Ansprüche 10 bis 17,
**dadurch gekennzeichnet,**
**dass** die Abschaltschicht auf die poröse anorganische Schicht aufgebracht wird und durch Einwickeln bei der Fertigung der Batterie fixiert wird.

19. Verfahren nach zumindest einem der Ansprüche 10 bis 18,
**dadurch gekennzeichnet,**
**dass** als Material für die Abschaltschicht ein solches eingesetzt wird, welches ausgewählt ist aus Polymeren, Polymermischungen, natürlichen und/oder künstlichen Wachsen und eine Schmelztemperatur von kleiner 180 °C aufweist.

20. Verfahren nach Anspruch 19,
**dadurch gekennzeichnet,**
**dass** als Abschaltmaterial Polyethylen(wachs) eingesetzt wird.

21. Verwendung eines Separators gemäß zumindest einem der Ansprüche 1 bis 8 als Separator in Lithiumbatterien.

22. Batterie, einen Separator gemäß zumindest einem der Ansprüche 1 bis 8 aufweisend.

## Claims

1. A lithium battery separator having a shutdown function and comprising a porous carrier having a porous inorganic nonelectroconductive coating on and in this carrier,
**characterized in that**
the inorganic coating, which comprises oxidic particles of the elements Al, Si and/or Zr having an average particle size in the range from 0.5 to 10 µm, supports a porous shutdown layer composed of a material which melts at a predetermined temperature and closes the pores of the inorganic layer, the shutdown layer being formed by a porous sheetlike structure selected from a woven, nonwoven, felt, formed-loop knit or porous film and the carrier comprising woven or non-woven polymeric or glass fibers.

2. Separator according to claim 1,
**characterized in that**
the carrier is flexible and less than 50 µm in thickness.

3. A separator according to claim 2,
**characterized in that**
the carrier is a polymeric nonwoven.

4. A separator according to at least one of claims 1 to 3,
**characterized in that**
the polymeric fibers of the carrier are selected from fibers of polyacrylonitrile, polyester and/or polyamide.

5. A separator according to at least one of claims 1 to 4,
**characterized in that**
the shutdown layer is from 1 to 20 and preferably from 5 to 10 µm in thickness.

6. A separator according to at least one of claims 1 to 5,
**characterized in that**
the shutdown layer consists of a material selected from polymers, polymer blends, natural or artificial waxes or mixtures thereof.

7. A separator according to at least one of claims 1 to 6,
**characterized in that**
the shutdown layer consists of a material which has a melting temperature of less than 130°C.

8. A separator according to at least one of claims 1 to 7,
**characterized in that**
the material of the shutdown layer and at least portions of the material of the carrier are identical.

9. A process for producing a separator having a shutdown function,
**characterized in that**
a porous inorganic layer of a separator has applied to and fixed on it a porous sheetlike structure as a porous layer (shutdown layer) composed of a material which has a defined, desired melting temperature which is not more than the melting temperature of the carrier material of the separator and less than the melting temperature of the inorganic layer, and shutdown layer is created by applying a woven, formed-loop knit, felt, nonwoven or porous film to the porous inorganic layer.

10. A process according to claim 9, **characterized in that** a separator according to at least one of claims 1 to 8 is produced.

11. A process according to claim 9,
**characterized in that**
the porous inorganic layer is hydrophobicized before the shutdown layer is applied to it.

12. A process according to at least one of claims 10 or 11
**characterized in that**,
the porous inorganic layer is treated with an adhesion promoter before the shutdown layer is applied to it.

13. A process according to claim 12,
**characterized in that**
the porous inorganic layer is produced by using a polymeric sol comprising a silane adhesion promoter for the shutdown layer to be applied later.

14. A process according to claim 13,
charaterized in that
the adhesion promoter is selected from hydrolyzed or nonhydrolyzed functionalized alkyltrialkoxysilanes.

15. A process according to at least one of claims 10 to 14,
**characterized in that**
the shutdown layer applied to the porous inorganic layer is heated once to a temperature above 50°C and below the melting temperature of the material of the shutdown layer so that the shutdown layer are adhered to the separator via the adhesion promoters.

16. A process according to at least one of claims 10 to 15,
**characterized in that**
the shutdown layer applied to the porous inorganic layer is fixed by single heating to a temperature above the glass transition temperature to incipiently melt the material without changing the actual shape.

17. A process according to at least one of claims 10 to 16,
**characterized in that**
the shutdown layer is applied to the porous inorganic layer by laminating.

18. A process according to at least one of claims 10 to 17,
**characterized in that**
the shutdown layer is applied to the porous inorganic layer and fixed by being trapped in a coil wound during battery fabrication.

19. A process according to at least one of claims 10 to 18,
**characterized in that**
the material for the shutdown layer is selected from polymers, polymer blends, natural and/or artificial waxes to have a melting temperature of less than 180°C.

20. A process according to claim 19,
**characterized in that**
the shutdown material used is polyethylene (wax).

21. The use of a separator according to at least one of claims 1 to 8 as a separator in lithium batteries.

22. A battery comprising a separator according to at least one of claims 1 to 8.

## Revendications

1. Séparateur à fonction de débranchement pour batteries au lithium, contenant un support poreux doté d'un revêtement minéral poreux, électriquement non conducteur, situé sur et dans ce support,
**caractérisé en ce que**
une couche poreuse de débranchement constituée d'un matériau qui fond à une température prédéterminée et qui ferme les pores de la couche minérale est prévue sur le revêtement minéral qui présente des particules d'oxyde des éléments Al, Si et/ou Zr d'une taille moyenne de 0,5 à 10 µm,
**en ce que** la couche de débranchement est formée par un produit plat poreux, sélectionné parmi les tissus, les feutres, les tricots ou une feuille poreuse et
**en ce que** le support présente des fibres tissées ou non tissées de polymère ou de verre.

2. Séparateur selon la revendication 1, **caractérisé en ce que** le support est flexible et présente une épaisseur inférieure à 50 µm.

3. Séparateur selon la revendication 2, **caractérisé en ce que** le support est un feutre de polymère.

4. Séparateur selon au moins l'une des revendications 1 à 3, **caractérisé en ce que** les fibres polymères du support sont sélectionnées parmi les fibres de polyacrylonitrile, de polyester et/ou de polyamide.

5. Séparateur selon au moins l'une des revendications 1 à 4, **caractérisé en ce que** la couche de débranchement présente une épaisseur de 1 à 20 et de préférence de 5 à 10 µm.

6. Séparateur selon au moins l'une des revendications 1 à 5, **caractérisé en ce que** la couche de débranchement est constituée d'un matériau sélectionné parmi les polymères, les mélanges de polymères, les cires naturelles ou artificielles et leurs mélanges.

7. Séparateur selon au moins l'une des revendications 1 à 6, **caractérisé en ce que** la couche de débranchement est constituée d'un matériau dont la température de fusion est inférieure à 130°C.

8. Séparateur selon au moins l'une des revendications 1 à 7, **caractérisé en ce que** le matériau de la couche de débranchement et au moins certaines parties du matériau de support sont identiques.

9. Procédé de fabrication d'un séparateur à fonction de débranchement, **caractérisé en ce que**
un produit plat qui présente la forme d'une couche poreuse (couche de débranchement) en un matériau est appliqué et fixé sur une couche minérale poreuse d'un séparateur, le matériau présentant une température définie et souhaitée de fusion inférieure ou égale à la température de fusion du matériau de support du séparateur et plus basse que la température de fusion de la couche minérale et
**en ce que** la couche de débranchement est formée par application d'un tissu, d'un tricot, d'un feutre ou d'une feuille poreuse sur la couche minérale poreuse.

10. Procédé selon la revendication 9, **caractérisé en ce qu'**il permet de fabriquer un séparateur selon au moins l'une des revendications 1 à 8.

11. Procédé selon la revendication 9, **caractérisé en ce que** la couche minérale poreuse est rendue hydrophobe avant l'application de la couche de débranchement.

12. Procédé selon au moins l'une des revendications 10 ou 11, **caractérisé en ce que** la couche minérale poreuse est traitée à l'aide d'un agent de renforcement de l'adhérence avant l'application de la couche de débranchement.

13. Procédé selon la revendication 12, **caractérisé en ce que** la couche minérale poreuse est réalisée par recours à un sol polymère qui présente un silane comme agent de renforcement de l'adhérence pour la couche de débranchement appliquée ultérieurement.

14. Procédé selon la revendication 13, **caractérisé en ce que** l'agent de renforcement de l'adhérence est sélectionné dans la série des alkyltrialcoxysilanes fonctionnalisés, hydrolysés ou non hydrolysés.

15. Procédé selon au moins l'une des revendications 10 à 14, **caractérisé en ce qu'**après avoir été appliquée sur la couche minérale poreuse, la couche de débranchement est chauffée une fois à une température supérieure à 50°C et inférieure à la température de fusion du matériau de la couche de débranchement de telle sorte que la couche de débranchement adhère au séparateur par l'intermédiaire de l'agent de renforcement de l'adhérence.

16. Procédé selon au moins l'une des revendications 10 à 15, **caractérisé en ce qu'**après avoir été appliquée sur la couche minérale poreuse, la couche de débranchement est fixée en étant chauffée une fois à une température supérieure à la température de vitrification de manière à obtenir une fusion du matériau sans modification de sa forme intrinsèque.

17. Procédé selon au moins l'une des revendications 10 à 16, **caractérisé en ce que** la couche de débranchement est appliquée par contrecollage sur la couche minérale poreuse.

18. Procédé selon au moins l'une des revendications 10 à 17, **caractérisé en ce que** la couche de débranchement est appliquée sur la couche minérale poreuse et est fixée par enroulement lors de la fabrication de la batterie.

19. Procédé selon au moins l'une des revendications 10 à 18, **caractérisé en ce que** comme matériau pour la couche de débranchement, il utilise un matériau sélectionné parmi les polymères, les mélanges de polymères, des cires naturelles et/ou les cires synthétiques et **en ce qu'**il présente une température de fusion inférieure à 180°C.

20. Procédé selon la revendication 19, **caractérisé en ce qu'**il utilise comme matériau de débranchement une (cire) de polyéthylène.

21. Utilisation d'un séparateur selon au moins l'une des revendications 1 à 8 comme séparateur dans des batteries au lithium.

22. Batterie présentant un séparateur selon au moins l'une des revendications 1 à 8.
